# EUROPEAN PATENT SPECIFICATION

(11) **EP 3 600 873 B1**
(45) Date of publication and mention of the grant of the patent: **03.03.2021**
(21) Application number: 18710501.0
(22) Date of filing: 19.03.2018
(51) Int. Cl.: B32B 5/18, B32B 5/32, B32B 7/02, B32B 7/08, B32B 7/12, B32B 27/06, B32B 27/40, B32B 25/04, B32B 25/12, B32B 25/16

(54) **COMPOSITE ELEMENT**
VERBUNDELEMENT
ÉLÉMENT COMPOSITE

(30) Priority: 20.03.2017 EP 17161779
(43) Date of publication of application: 05.02.2020
(73) Proprietor: BASF SE, 67056 Ludwigshafen am Rhein (DE)
(72) Inventor: PRISSOK, Frank, 49448 Lemfoerde (DE); KARAPETYAN, Gnuni, 51067 Köln (DE)
(74) Representative: BASF IP Association
(86) International application number: PCT/EP2018/056892
(87) International publication number: WO 2018/172287

(56) References cited:
- US-A- 5 194 325
- US-A- 5 506 275
- US-A1- 2005 126 848
- US-A1- 2016 262 490

## Description

The present invention relates to a composite element comprising at least two elements, wherein each element has a body, a longitudinal extension and a height h vertical to the longitudinal extension and comprises a polymeric material with cellular structure, wherein the elements are at least in partial contact parallel to the longitudinal extension and have a closed surface at least in the contact area. Furthermore, the invention relates to a method for producing the composite element, a composite element, obtained or obtainable by said method and the use of the composite element.

### Prior art:

US 2005/126848 A1 discloses a composite element comprising at least two elements of polymeric foam material, wherein the elements have a closed surface at least in the contact area. The foam may be polyurethane foam.

US 4 782 605 A discloses the use of a composite element for a shoe insert.

In many application fields, for example, in the field of sport articles such as footwear, a strong demand exists for high performance materials, which should be superior in their mechanical properties. Especially for footwear materials are required having low densities, resulting in low weight, in combination with high elasticity and further improved mechanical properties. An important aspect is damping, i.e. the ability of a material to reduce impact forces and rebound resiliance. Currently elastomeric foams are used for production of high performance shoe soles. However, the known foam materials generally have an upper limitation in beneficial performance like, for example, energy return since continuous reduction of foam density generally results in unfavorable reduction of energy return. Thus, a continuous enhancement of energy return of low density final articles made from elastic foam materials is an important challenge.

It was therefore an object of the present invention to provide materials having good dimensional stability and, simultaneously, improved damping properties. According to the present invention, such object is achieved by the use of a composite element as defined in claim 1. The invention concerns also a corresponding method of production as defined in claim 14, and a composite element as defined in claim 15. Further, preferred embodiments are covered by the dependent claims.

The object of the invention is achieved by a composite element comprising at least two elements, wherein each element has a body, a longitudinal extension and a height h vertical to the longitudinal extension and comprises a polymeric material with cellular structure, wherein the elements are at least in partial contact parallel to the longitudinal extension and have a closed surface (skin) at least in the contact area. "Closed surface" means that at least 80 %, preferably 85 %, more preferably 90 %, more preferably 95 %, of the surface area do not have open pores. "Polymeric material with cellular structure" means a polymeric material having cells (synonymous pores) distributed within its structure. Preferably, the polymeric material with cellular structure is a foam made of the polymeric material.

The densities of the composite elements according to the present invention are lower than the densities of in comparative elements made from the same material but consisting of one (block) element. Furthermore, even despite the lower density, the composite elements according to the present invention provide beneficially lower energy loss and improved damping compared to the block elements. This is a surprising finding since it is well known in the art that continuous reduction of foam density normally leads to unfavorable increase of energy loss. Surprisingly, the composite elements according to the present invention offer higher energy return.

As mentioned above, the composite element comprises at least two elements, wherein each element has a body, a longitudinal extension and a height h vertical to the longitudinal extension and comprises a polymeric material with cellular structure, wherein the elements are at least in partial contact parallel to the longitudinal extension and have a closed surface (skin) at least in the contact area. "Closed surface at least in the contact area" means that each element has a skin at least in the contact area with its adjacent element, however, each element's surface may be closed or open in non-contact areas, for example, in case of plate like elements, which are in contact over their larger surfaces, the sides, i.e. the smaller surfaces, where no contact with an adjacent element is given, may display open pores or may equally display a closed surface.

In a preferred embodiment of the composite element according to the present invention, each element consists of the polymeric material with cellular structure.

In principle, no restrictions exist regarding the dimensions of the composite element, in particular, no restrictions exist regarding the height H of the composite element vertical to each element's longitudinal extension. Preferably, the composite element has a height H vertical to each element's longitudinal extension, which is in the range of from 1 to 10000 mm, more preferably in the range of from 5 to 1000 mm, more preferably in the range of from 5 to 50 mm. In principle, also no restrictions exist regarding the dimensions of each element, provided that the sum of the individual dimensions of each elements is equal to the dimensions of the composite element. Preferably, each element's height h is in the range of from 0.25 to 2500 mm, more preferably in the range of from 0.5 to 250 mm, more preferably in the range of from 0.75 to 250 mm, more preferably in the range of from 1 to 10 mm.

In principle, no restrictions exist regarding the build-up of the closed surface (skin) of the elements. In one preferred embodiment of the composite element, the closed surface of the elements is an integral skin. Any other kind of build-up of a closed surface is possible. Thus, in another preferred embodiment, the closed surface of the elements is formed by an external layer, which is preferably adhesively bonded to the element's body, wherein the material of the external layer is preferably the same polymeric material as the element's polymeric material.

In principle, no restrictions exist regarding the thickness of the closed surface of the elements, provided that the sum of the closed surfaces of the element in one direction is less than the thickness of the element in that direction. Preferably, the closed surface of each element has a thickness (vertical to the element's longitudinal extension) in the range of from 10 to 2000 µm, preferably in the range of from 50 to 500 µm.

In principle, no restrictions exist regarding the adhesion between the individual elements as long as the elements stick together. Thus, adhesion between the individual elements may simply be based on mechanical or electrostatic adhesion. Preferably, the elements of the composite element are adhesively bonded in the contact area, preferably by a method selected from the group consisting of stitching, steam-chest molding, gluing and others.

In principle, no restrictions exist regarding the number of elements comprised by one composite element, provided that there are at least two elements present. Preferably, the composite element comprises at least 3 elements, more preferably from 3 to 10 elements.

The polymeric material with cellular structure of each element of the composite element is independently from each other the same or different. In one preferred embodiment, the polymeric material with cellular structure of each element is the same. In another preferred embodiment, the polymeric material with cellular structure of at least one element of the composite element is different to the polymeric material with cellular structure of the other element(s). The hardness of each element of the composite element is independently from each other the same or different. The stiffness of each element of the composite element is independently from each other the same or different. Further, the density of each element of the composite element is independently from each other the same or different. Still further, the rebound resilience of each element of the composite element is independently from each other the same or different.

As outlined in more detail above, the polymeric material with cellular structure is preferably a foam, more preferably a foam according to DIN 7726. In principle, no restrictions exist regarding modes of foam preparation. Preferably, the polymeric material with cellular structure of each element of the composite element is prepared by a process selected from the group consisting of reactive foaming, preferably injection moulding or casting, and extrusion foaming, wherein the process is carried out continuously or discontinuously. In principle, no restrictions exist regarding the polymeric material, provided that it is capable of forming a cellular structure. The present invention is related to a composite element, wherein the polymeric material with cellular structure of each element is independently selected from polyurethane foams.

For the purposes of the invention, "polyurethane" comprises all of the known polyisocyanate polyaddition products. These comprise adducts of isocyanate and alcohol, and they also comprise modified polyurethanes which can comprise isocyanurate structures, allophanate structures, urea structures, carbodiimide structures, uretonimine structures, and biuret structures, and which can comprise further isocyanate adducts. These polyurethanes of the invention comprise in particular foams based on polyisocyanate polyaddition products, e.g. elastomeric foams, flexible foams, semirigid foams and rigid foams. For the purposes of the invention, the term polyurethanes also includes polymer blends comprising polyurethanes and further polymers, and also foams made of said polymer blends. Preferably, the polymeric material with cellular structure of each element is independently selected from the group of elastomeric foams, wherein the polymeric material is preferably selected from the group consisting of ethylenvi-nylacetate (EVA), poly butadiene, ethylene propylene diene (EPDM) rubber, styrene butadiene rubber (SBR), synthetic rubber, natural rubber, polyurea, and polyurethane.
For the purposes of this invention, elastomeric polyurethane foams are polyurethane foams according to DIN 7726, where these exhibit no residual deformation beyond 2% of their initial thickness 10 minutes after brief deformation amounting to 50% of their thickness to DIN 53 577.

The compressive stress value for flexible polyurethane foams of the invention at 10% compression, or the compressive strength of these foams according to DIN 53 421/DIN EN ISO 604, is 15 kPa or less, preferably from 1 to 14 kPa, and in particular from 4 to 14 kPa. The compressive stress value for semirigid polyurethane foams of the invention at 10% compression to DIN 53 421/DIN EN ISO 604 is from greater than 15 to less than 80 kPa. The open-cell factor to DIN ISO 4590 of semirigid polyurethane foams of the invention and of flexible polyurethane foams of the invention is preferably greater than 85%, particularly preferably greater than 90%. Further details concerning flexible polyurethane foams of the invention and semirigid polyurethane foams of the invention are found in "Kunststoffhandbuch, Band 7, Polyurethane" [Plastics handbook, volume 7, Polyurethanes], Carl Hanser Verlag, 3rd edition, 1993, chapter 5.

The compressive stress value for rigid polyurethane foams of the invention at 10% compression is greater than or equal to 80 kPa, preferably greater than or equal to 120 kPa, particularly preferably greater than or equal to 150 kPa. The closed-cell factor to DIN ISO 4590 for the rigid polyurethane foam is moreover greater than 80%, preferably greater than 90%. Further details concerning rigid polyurethane foams of the invention are found in "Kunststoffhandbuch, Band 7, Polyurethane" [Plastics handbook, volume 7, Polyurethanes], Carl Hanser Verlag, 3rd edition, 1993, chapter 6.

Integral polyurethane foams are polyurethane foams according to DIN 7726 having a marginal zone in which the density is higher than in the core, as a result of the shaping process. The overall density here averaged over the core and the marginal zone is preferably above 100 g/L. For the purposes of the invention, integral polyurethane foams can again be rigid polyurethane foams, semirigid polyurethane foams, flexible polyurethane foams or elastomeric polyurethane foams. Further details concerning the integral polyurethane foams of the invention are found in "Kunststoffhandbuch, Band 7, Polyurethane" [Plastics handbook, volume 7, Polyurethanes], Carl Hanser Verlag, 3rd edition, 1993, chapter 7.

Polyurethane foams are obtained or obtainable here by reacting at least components (a) to (c):
(a) polyisocyanate composition;
(b) polyol composition;
(c) blowing agent composition.
Preferably, at least one further component (d) selected from the group consisting of chain extenders (d1), crosslinkers (d2) and catalysts (d3) is added. Further, if appropriate, other auxiliaries and additives (e) are added to give a reaction mixture and permitting completion of the reaction.

Polyisocyanate composition (a) used for producing the polyurethanes of the invention comprise all of the polyisocyanates known for producing polyurethanes. These comprise the aliphatic, cycloaliphatic, and aromatic di- or polyfunctional isocyanates known from the prior art, and also any desired mixtures thereof. Preferably, the polyisocyanate composition (a) comprises at least one polyisocyanate selected from the group consisting of diisocyanates and prepolymers thereof, more preferably selected from the group consisting of aromatic diisocyanates and prepolymers thereof, more preferably from the group consisting of isophorondiisocyanate (IPDI), toluene-2,4-diisocyanate (TDI), 2,2'- diphenylmethanediisocyanate (2,2'-MDI), 2,4'-diphenylmethanediisocyanate (2,4'-MDI), 4,4'-diphenylmethanediisocyanate (4,4'-MDI), hexamethylene-1,6-diisocyanate (HDI) and 4,4'-, 2,4'- methylenedicyclohexyldiisocyanate, 2,2'-methylenedicyclohexyldiisocyanate (H12MDI), 1,5-naphthalene diisocyanate (NDI), 3,3'-dimethyidiphenyl 4,4'-diisocyanate (TODI) and prepolymers, more preferably selected from the group consisting of 2,2'-MDI, 2,4'-MDI, 4,4'-MDI and prepolymers thereof. Other possible isocyanates are given by way of example in "Kunststoffhandbuch, Band 7, Polyurethane" [Plastics handbook, volume 7, Polyurethanes], Carl Hanser Verlag, 3rd edition, 1993, chapters 3.2 and 3.3.2. Polyisocyanate composition (a) can be used in the form of polyisocyanate prepolymers. Said polyisocyanate prepolymers are obtainable by reacting an excess of polyisocyanates (constituent (a-1)) described above with polyols (constituent (a-2)), for example at temperatures of from 30 to 100°C, preferably about 80°C, to give the prepolymer.

Polyols (a-2) are known to the person skilled in the art and are described by way of example in "Kunststoffhandbuch, 7, Polyurethane" [Plastics handbook, volume 7, Polyurethanes], Carl Hanser Verlag, 3rd edition, 1993, chapter 3.1. By way of example, therefore, the polyols used can also comprise the polyols described below under (b).
Polyols that can be used for polyol composition (b) comprise all of the compounds known for polyurethane production and having at least two reactive hydrogen atoms, examples being those having functionality of from 2 to 8 and molecular weight of from 400 to 15 000. It is therefore possible by way of example to use polyols selected from the group of the polyether polyols (polyetherols), polyester polyols (polyesterols), graft polyols, for example, styrene acrylonitrile based graft polyols, and mixtures thereof.

By way of example, polyetherols are produced from epoxides, such as propylene oxide and/or ethylene oxide, or from tetrahydrofuran, by using starter compounds containing active hydrogen, e.g. aliphatic alcohols, phenols, amines, carboxylic acids, water, or compounds based on natural materials, e.g. sucrose, sorbitol, or mannitol, with use of a catalyst. Mention may be made here of basic catalysts or double-metal-cyanide catalysts, as described by way of example in WO 2006/034800 A1, EP 0090444 or WO 2005/090440 A1.Further polyetherols are made by ring opening polymerization, for example, poly THF.

By way of example, polyesterols are produced from aliphatic or aromatic dicarboxylic acids and from polyfunctional alcohols, from polythioether polyols, from polyesteramides, from polyacetals containing hydroxy groups, and/or from aliphatic phosphorus containing alcohols containing hydroxy groups, preferably in the presence of an esterification catalyst. Other possible polyols are given by way of example in "Kunststoffhandbuch, Band 7, Polyurethane" [Plastics handbook, volume 7, Polyurethanes], Carl Hanser Verlag, 3rd edition, 1993, chapter 3.1.

Preferably, the polyol composition (b) comprises at least one polyol selected from the group consisting of polyesterols, polyetherols, polycarbonates and block copolymers thereof, more preferably selected from the group consisting of polytetrahydrofurane (PTHF), polyethylene glycol, polypropylene glycol, polyoxypropylene polyoxyethylene, polyadipates, polycarbonate(diol)s and polycaprolactons, more preferably PTHF.

Blowing agent composition (c) is used since the polyurethane is intended to take the form of polyurethane foam. It is possible here to use any of the blowing agents known for producing polyurethanes. These can comprise chemical and/or physical blowing agents. These blowing agents are described by way of example in "Kunststoffhandbuch, Band 7, Polyurethane" [Plastics handbook, volume 7, Polyurethanes], Carl Hanser Verlag, 3rd edition, 1993, chapter 3.4.5. The term chemical blowing agents is used here for compounds which form gaseous products via reaction with isocyanate. Examples of these blowing agents are water and carboxylic acids, wherein water is a preferred blowing agent. Further chemical blowing agents are microspheres consisting of a polymer shell encapsulating a gas, aka "expandable beads", for example Expancell®. The term physical blowing agents is used here for compounds which have been dissolved or emulsified in the starting materials for polyurethane production and which evaporate under the conditions of polyurethane formation. By way of example, these are hydrocarbons, halogenated hydrocarbons, and other compounds, e.g. perfluorinated alkanes, such as perfluorohexane, fluorochlorocarbons, and ethers, esters, ketones, acetals, and/or a liquid form of carbon dioxide. The amount used of the blowing agent here can be as desired. The amount used of the blowing agent is preferably such that the free density of the resultant polyurethane foam is from 10 to 1000 g/L, particularly preferably from 20 to 800 g/L, and in particular from 25 to 200 g/L.

A preferred embodiment of the present invention relates to a composite element as disclosed above, wherein the polyurethane foam is obtained or obtainable by reacting at least components (a) to (c):
(a) polyisocyanate composition comprising at least 4,4'-MDI;
(b) polyol composition comprising at least one polyetherol;
(c) blowing agent composition comprising at least water.
Preferably, at least one further component (d) selected from the group consisting of chain extenders (d1) crosslinkers (d2) and catalysts (d3) is added. Further, if appropriate, other auxiliaries and additives (e) are added to give a reaction mixture and permitting completion of the reaction.

Polyols (b) also comprise chain extenders (d1) and crosslinkers (d2). The molar mass of chain extenders and crosslinkers is less than 400 g/mol, and the term used here for molecules having two hydrogen atoms reactive toward isocyanate is chain extenders, while the term used for molecules having more than two hydrogens reactive toward isocyanate is crosslinkers. Although it is possible here to omit the chain extender or crosslinker, addition of chain extenders or crosslinkers or else, if appropriate, a mixture thereof has proven advantageous for modifying mechanical properties, e.g. hardness.

If chain extenders (d1) and/or crosslinkers (d2) are used, it is possible to use the chain extenders and/or crosslinkers that are known for the production of polyurethanes. These are preferably low-molecular-weight compounds having functional groups reactive toward isocyanates, examples being glycerol, trimethylol-propane, glycol, and diamines. Other possible low-molecular-weight chain extenders and/or crosslinkers are given by way of example in "Kunststoffhandbuch, Band 7, Polyurethane" [Plastics handbook, volume 7, Polyurethanes], Carl Hanser Verlag, 3rd edition, 1993, chapters 3.2 and 3.3.2.

Preferably, a chain extender (d1) is selected from the group consisting of alkanediols containing 2 to 12, preferably 2, 4 or 6 carbon atoms, preferably selected from the group consisting of ethanediol, 1,6-hexanediol, 1,7-heptanediol, 1,8-octanediol, 1,9-nonanediol, 1,10-decanediol and 1,4-butanediol; dialkylene glycols containing 4 to 8 carbon atoms, preferably selected from diethylene glycol and dipropylene glycol; polyoxyalkylene glycols; branched chain and/or unsaturated alkanediols, preferably selected from the group consisting of 1,2-propanediol, 2-methyl-1,3-propanediol methyl-1,3-propanediol, 2,2-dimethyl-1,3-propane- diol, 2-butyl-2-ethyl-1,3-propanediol, 2-butene-1,4-diol and 2-butene-1,4-diol; diesters of terephthalic acid with glycols comprising 2 to 4 carbon atoms, preferably selected from the group consisting of terephthalic acid-bis-ethylene glycol and terephthalic acid-bis-1,4-butanediol; hydroxyalkylene ethers of hydroquinone or resorcinol, preferably selected from the group consisting of 1,4-di-(beta-hydroxyethyl)-hydroquinone and 1,3-(beta-hydroxyethyl)-resorcinol; alkanolamines comprising 2 to 12 carbon atoms, preferably selected from the group consisting of ethanolamine, 2-aminopropanol and 3-amino-2,2-dimethylpropanol; N-alkyldialkanolamines, preferably selected from the group consisting of N-methyl- and N-ethyl-diethanolamines; (cyclo)aliphatic diamines comprising 2 to 15 carbon atoms, preferably selected from the group consisting of 1,2-ethylenediamine, 1,3-propylenediamine, 1,4-butylene-diamine and 1,6-hexamethylenediamine, isophoronediamine, 1,4-cyclohexa-methylenediamine and 4,4'-diaminodicyclohexylmethane; N-alkyl-, N,N'-dialkyl-substituted and aromatic diamines, which may also be substituted by alkyl groups on their aromatic radical, and comprising 1 to 20, preferably 1 to 4 carbon atoms in their N-alkyl radical, preferably selected from the group consisting of N,N'-diethyl-, N,N'-di-sec.-pentyl-, N,N'-di-sec.-hexyl-, N,N'-di-sec.-decyl- and N,N'-dicyclohexyl-, (p- or m-) phenylenediamine, N,N'-dimethyl-, N,N'-diethyl-, N,N'-diisopropyl-, N,N'-di-sec.-butyl-, N,N'-dicyclohexyl-, 4,4'-diamino-diphenylmethane, N,N'-di-sec.-butylbenzi- dine, methylene-bis(4-amino-3-benzoic acid methyl-ester), 2,4-chloro-4,4'-diamino-diphenylmethane, 2,4- and 2,6-diaminotoluene, and mixtures of one or more of these chain extenders. A crosslinker (d2) is preferably a compound which has at least three groups which are functional towards isocyanate groups and has a molecular weight of less than 600 g/mol, wherein the groups, which are functional towards isocyanate are preferably selected from hydroxy group, amino group and thio group, more preferably selected from the group consisting of glycerine, triethanolamine and diethanolamine, more preferably diethanolamine.

Catalysts (d3) used can comprise any of the catalysts usually used for polyurethane production. These catalysts are described by way of example in "Kunststoffhandbuch, Band 7, Polyurethane" [Plastics handbook, volume 7, Polyurethanes], Carl Hanser Verlag, 3rd edition, 1993, chapter 3.4.1. Preferably, a catalyst (d3) is selected from the group consisting of amine catalyst, organic metal compound and mixtures thereof, wherein the amine catalyst is selected from the group consisting of tertiary amines, preferably selected from the group consisting of tributylamine, tri-ethanolamine, triisopropanolamine, N-methyl-diethanolamine, N-ethyl-diethanolamine, N,N-dimethylethanolamine, N-methylmorpholine, N-ethyl-morpholine, N,N,N',N'-tetramethyl-ethylenediamine, pentamethyldiethylene-triamine; 1,4-diaza-bicyclo-(2,2,2)-octane, N-methyl-N'-dimethylaminoethylpiperazine, bis-(dimethylaminoalkyl)-piperazine, N,N-dimethylbenzylamine, N,N-dimethylcyclohexylamine, N,N-diethylbenzylamine, bis-(N,N-diethylaminoethyl) adipate, N,N,N',N'-tetramethyl-1,3-butanediamine, N,N-dimethyl-beta-phenylethyl-amine, bis-(dimethylaminopropyl)-ure-a, 1,2-dimethylimidazole, 2-methylimidazole, monocyclic and bicyclic amidines, bis-(dialkylamino)-alkyl ethers, secondary amines, preferably dimethylamine; aldehydes, preferably formaldehyde, ketones, preferably selected from the group consisting of acetone, methyl ethyl ketone, cyclohexanone, phenols, preferably selected from the group consisting of phenol, nonylphenol and bisphenol; and mixtures of two or more of these amine catalysts; wherein the organic metal compound is selected from organic metal compounds of a metal selected from the group consisting of zin, zinc, bismuth, titan, zirconium, manganese, iron, cobalt, copper and aluminum, preferably selected from the group of zinn-(II)-salts of organic carboxylic acids, preferably selected from the group consisting of zin-(II)-acetate, zin-(II)-octoate, zin-(II)-ethylhexoate and zin-(II)-laurat, dialkyl zin-(IV)-salts of organic carboxylic acids, preferably selected from the group consisting of dibutyl-zin diacetate, dibutyl-zin dilaurate, dibutyl-zin-maleate and dioctyl-zin-diacetate; bismuth carboxylates, preferably selected from the group consisting of bismuth(III)-neodecanoate, bismuth-2-ethylhexanoate and bismut-octanoate; titan compounds, preferably selected from the group consisting of titan-IV-(triethanolamito)-isopropxide and titan-IV-bis(triethanolamito)diisopropoxide; and mixtures of two or more of these organic metal compounds. The catalysts can be used individually or in the form of mixtures. If appropriate, the catalysts (d3) used comprise mixtures of one or more organic metal compound(s) and of one or more amine catalyst(s). Examples of the concentration of the catalysts (d3) that can be used are from 0.001 to 5% by weight, in particular from 0.05 to 2% by weight in the form of catalyst or catalyst combination, based on the weight of polyol composition (b).

A preferred embodiment of the present invention relates to a composite element, wherein the polyurethane foam is obtained or obtainable by reacting at least components (a) to (c) and further (d1) to (d3):
(a) a polyisocyanate composition comprising at least 4,4'-MDI;
(b) a polyol composition comprising at least one polyetherol;
(c) water;
(d1) a chain extender comprising at least monoethylene glycol or propylene glycol;
(d2) optionally, a crosslinker comprising at least diethanolamine;
(d3) a catalyst comprising at least triethylene diamine, bis-(2-dimethylaminoethyl)ether or bismuth neodecanoate;
It is also possible to use auxiliaries and/or additives (e). It is possible here to use any of the auxiliaries and additives known for producing polyurethanes. By way of example, mention may be made of surface-active substances, foam stabilizers, cell regulators, release agents, fillers, dyes, pigments, flame retardants, hydrolysis stabilizers, for example polymeric carbodiimides such as Elastostab, cell morphology control agents, for example, siloxanes, antioxidants, anti aging additives, antistatic agents, cell modifiers and fungistatic and bacteriostatic substances. These substances are described by way of example in "Kunststoffhandbuch, Band 7, Polyurethane" [Plastics handbook, volume 7, Polyurethanes], Carl Hanser Verlag, 3rd edition, 1993, chapter 3.4.4 and 3.4.6 to 3.4.11.

In principle, no restriction exist regarding the shape of the elements of the composite element, provided that the shape enables at least a partial contact of the elements parallel to the longitudinal extension. Preferably, the shape of each element having body, a longitudinal extension and a height h vertical to the longitudinal extension is independently selected from the group of cuboid, especially rectangular cuboid or cube; prism; cylinder (height h = 2x cylinder radius, longitudinal extension = cylinder height); and sphere (height h = sphere diameter), wherein preferably all elements of one composite element have the same shape.

### Method for producing a composite element

The present invention also relates to a method for producing a composite element, which comprises at least two elements, wherein each element has a body having a longitudinal extension and comprises a polymeric material with cellular structure, wherein the elements are at least in partial contact parallel to the longitudinal extension and have a closed surface (skin) at least in the contact area, comprising:
(i) optionally preparing elements by foaming, preferably in a mold, wherein each element has a body having a longitudinal extension and comprises a polymeric material with cellular structure and has at least partially a closed surface;
(ii) superimposing at least two elements, wherein superimposition is done so that the elements are at least partially in contact over their closed surfaces (contact area);
(iii) adhesive bonding the elements.

Preferably, step (i) comprises
(ii.1) introducing into a mold at least the components
   (a) Polyisocyanate composition;
   (b) polyol composition;
   (c) blowing agent composition;
(ii.2) reacting components (a) and (b) by foaming,
resulting in an element which has a body having a longitudinal extension and comprises a polymeric material with cellular structure and has at least partially a closed surface.

Regarding the components (a), (b) and (c), the same applies as disclosed above with respect to the composite element. Also here, preferably, at least one further component (d) selected from the group consisting of chain extenders (d1), crosslinkers (d2) and catalysts (d3) is added. Further, if appropriate, other auxiliaries and additives (e) are added to give a reaction mixture and permitting completion of the reaction. Regarding the components (d), i.e. (d1), (d2) and (d3) and (e), the same applies as disclosed above with respect to the composite element.

When producing the element which has a body having a longitudinal extension and comprises a polymeric material with cellular structure and having at least partially a closed surface, the amounts reacted of the Polyisocyanate composition (a), the polyol compositon (b) and the blowing agent compositon (c) are generally such that the equivalence ratio of NCO groups of the polyisocyanates in (a) to the total number of reactive hydrogen atoms in components (b) and (c), is from 0.75 to 1.5:1, preferably from 0.80 to 1.25:1. If the polymeric material with cellular structure comprises at least some isocyanurate groups, the ratio used of NCO groups of the polyisocyanates in (a) to the total number of reactive hydrogen atoms in component (b) and (c) and, if appropriate, (d) and (e) is usually from 1.5 to 20:1, preferably from 1.5 to 8:1. A ratio of 1:1 here corresponds to an isocyanate index of 100.

There is respectively very little quantitative and qualitative difference between the specific starting materials (a) to (e) used for producing polyurethanes of the invention when the polyurethane to be produced of the invention is an elastomeric foam, a flexible foam, a semirigid foam, a rigid foam, or an integral foam. By way of example, the starting materials for producing a flexible foam are described in WO 2006/034800 A1 and EP 1529792 A1, the starting materials for producing a semirigid foam are described in "Kunststoffhandbuch, Band 7, Polyurethane" [Plastics handbook, volume 7, Polyurethanes], Carl Hanser Verlag, 3rd edition, 1993, chapter 5.4, the starting materials for producing a rigid foam are described in WO 2006/042674 A1, and the starting materials for producing an integral foam are described in EP 0364854 A1, U.S. Pat. No. 5,506,275, or EP 0897402 A1.

In principle, no restrictions exist regarding the adhesive binding in (iii) between the individual elements as long as the elements stick together. Thus, adhesive binding between the individual elements may simply be based on mechanical or electrostatic adhesion. Preferably, the adhesive bonding in (iii) is done by a method selected from the group consisting of stitching, steam-chest molding, welding, microwave bonding, hot-pressing, reactive bonding and gluing.

The present invention also relates to a composite element, obtained or obtainable by the method described above.

The present invention also relates to the use of a composite element as disclosed above or of a composite element obtainable or obtained according to the process as disclosed above as a damping element, preferably as damper for seismic vibration control of constructions, preferably buildings or bridges. The present invention also relates to the use of a composite element as disclosed above or of a composite element obtainable or obtained according to the process as disclosed above as a mattress or part of a mattress. The present invention also relates to the use of a composite element as disclosed above or of a composite element obtainable or obtained according to the process as disclosed above as a furniture element or flouring element. The present invention also relates to the use of a composite element as disclosed above or of a composite element obtainable or obtained according to the process as disclosed above as an element of automotive industry, preferably an element selected from the group of dashboard, bearing and tire. The present invention also relates to the use of a composite element as disclosed above or of a composite element obtainable or obtained according to the process as disclosed above as a shoe sole or as a part of a shoe sole.

Further, the present invention relates to a part of a shoe sole, obtained or obtainable by the method as disclosed above.

The present invention is further illustrated by the following reference examples, comparative examples, and examples.

### Examples

### Chemicals

| compound | Chemical composition |
|---|---|
| Isocyanate 1 | 98,2% Diphenylmethane-4,4'-diisocyanate and 1,8% Diphenylmethane-2,4'-diisocyanate |
| Isocyanate 2 | carbodiimide-modified diphenylmethane-4,4-diisocyanate |
| Polyol 1 | polyether polyol: propylene glycol used as starter; Polypropylene glycol,OH number 55 mg KOH/g |
| Polyol 2 | polyether polyol: linear polypropylene glycol with OH number 28 mg KOH/g |
| Polyol 3 | DMC catalysed polyether polyol OH number in the range from 26 to 30 mg KOH/g |
| Polyol 4 | DMC catalysed polyether polyol OH number in the range from 46 to 50 mg KOH/g |
| Polyol 5 | 2,5-functionalbranched polyether polyol: Glycerine started polyoxypropylene polyoxyethylene with polyoxyethylene content of 20 weight-% in relation to the alkylene oxide content, OH number 27 mg KOH/g |
| Polyol 6 | polyether polyol grafted with styrene-acrylonitrile, OH number 20 mg KOH/g |
| Polyol 7 | Poly tetramethylene ether glycol (PTHF), OH Number 56 mg KOH/g |
| Acid | Diglycol-bis-Chlorformiat |
| Stabiliser 1 | Silicon-based stabilizer additive (Dabco® DC 193) |
| Stabilizer 2 | Silicon-based stabilizer additive (Tegostab B 8491) |
| Chain extender 1 | Monoethylene glycol |
| Chain extender 2 | Tripropylene glycol |
| Amine Catalyst 1 | Triethylene diamine |
| Amine catalyst 2 | Bis-(2-dimethylaminoethyl)ether (70%) |
| Metal catalyst 1 | Bismuth neodecanoate |
| Cross linker 1 | Diethanolamine |

| | |
|---|---|
| Determination of OH numbers: DIN 53 240. | |

### Example 1 - Preparation of block elements and composite elements

The compositions of the prepolymers as used are shown in Table 1. Table 2 indicates the complete composition including the polyol blend, the corresponding prepolymer of Table 1, the foaming parameters and general mechanical properties of prepared foams. From each of the three prepolymer formulations as mentioned in Table 1 test plates (block elements) with thickness (height H) of 20 mm were prepared with a constant density of 350 g/l using mould with thickness of 20 mm according to the complete formulations and parameters as indicated in Table 2 (1477-13 comparative, 1477-14 comparative and 1477-15 comparative).

Additionally, from each of the three prepolymer formulations as mentioned in Table 1 five test plates (elements in plate form) with a thickness (height h) of 4 mm were prepared according to the complete formulations and parameters as indicated in Table 2 (1477-13 inventive, 1477-14 inventive and 1477-15 inventive) using a mould with a thickness of 4 mm. The composite elements with overall thickness (height H) of 20 mm were made by superimposition of the five separately made elements in plate form from the same system, each having a thickness (height h) of 4 mm.

**Table 1: composition of prepolymers used**

| Trial No. | | | ISO 137/53 | 1477-7 | 1477-8 | ISO 137/28 |
|---|---|---|---|---|---|---|
| Prepolymers | NCO % | OHZ | | | | |
| Isocyanate 1 | 33,5 | | 61,4 | 60,9 | 62,1 | 61,4 |
| Isocynate 2 | 29,5 | | 2 | 2 | 2 | 2 |
| Chain extender 2 | 0 | 582 | 4 | 4 | 4 | 4 |
| Polyol 1 | 0 | 55 | 8,2 | | | 32,5 |
| Polyol 2 | 0 | 28 | 24,4 | | | |
| Polyol 3 | 0 | 29 | | 33,0 | | |
| Polyol 4 | 0 | 47 | | | 31,8 | |
| Acid | 0 | 0 | 0,01 | 0,05 | 0,05 | 0,01 |
| NCO-content (measured) | [%] | | 18,4 | 18,3 | 18,4 | |
| Viscosity (at 25°C) | [mPas] | | 735 | 1885 | 996 | |

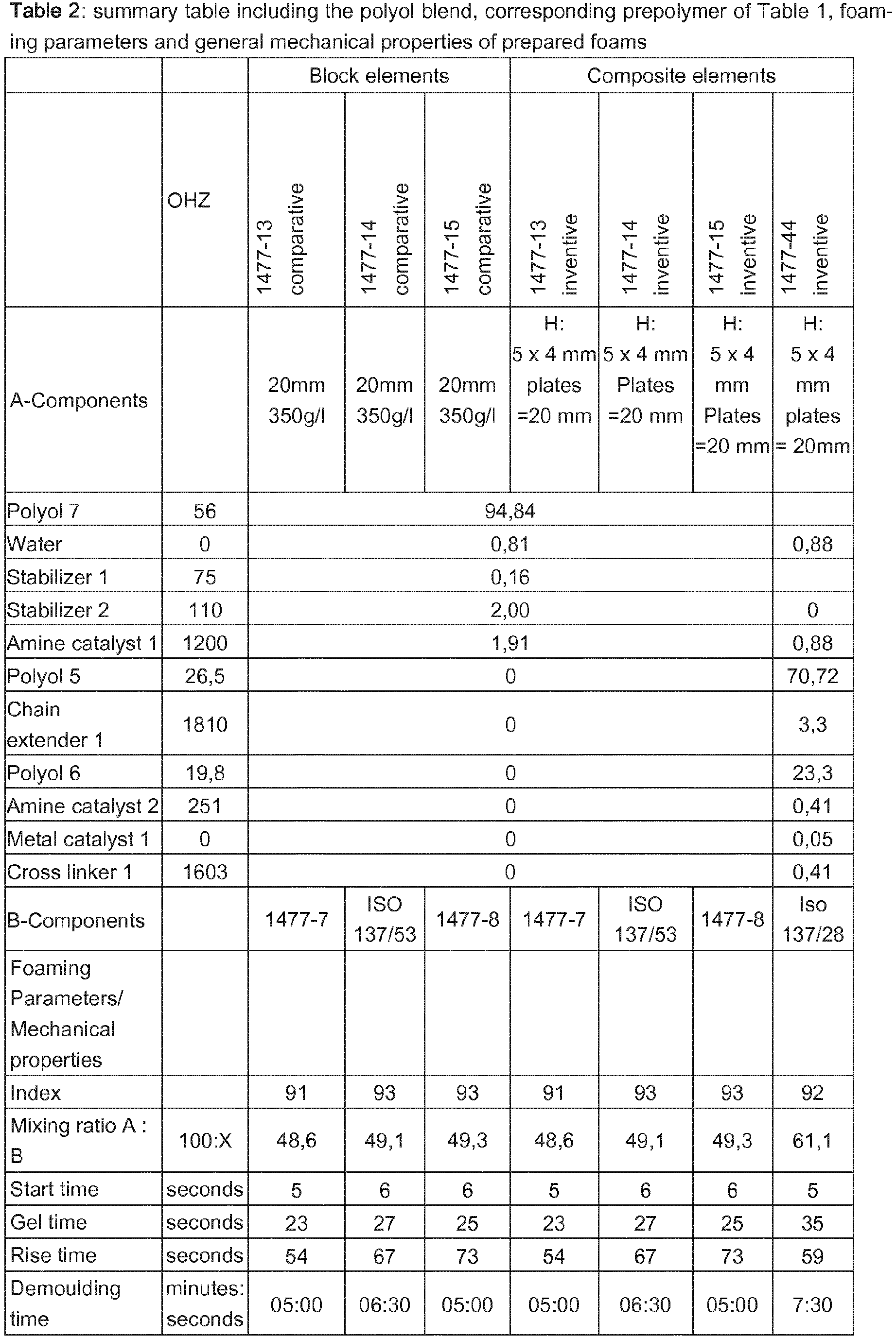

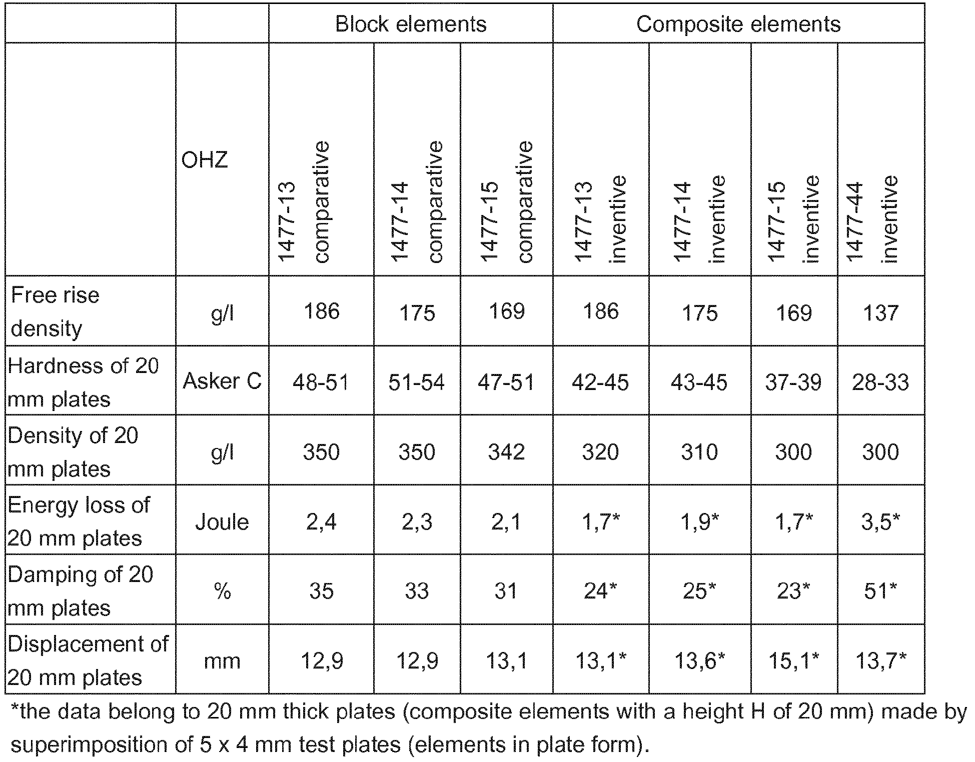

The densities of resulting composite elements 1477-13 inventive, 1477-14 inventive, 1477-15 inventive and 1477-44 inventive are 320, 310 and 300 g/l. Thus, the densities of those materials are 9-14% lower than in comparative block elements 1477-13 comparative, -14 comparative and -15 comparative.

Short term mechanical tests (hysteresis profiles after 100 load cycles) of 20 mm block elements and composite elements from all samples were measured by Hydraulic Impact Test according to the test method published in by Brueckner et al. [Brueckner at al., Procedia Engineering 2 (2010) 2789-2793]. Short term mechanical properties after 100 load cycles including energy loss (%) and damping (%) for all foams is shown in Table 2. The "Energy loss" indicated in [J] represents the energy which is absorbed by the materials and dissipated to thermal energy. The "Damping" (known also as relative energy loss) indicated in [%] represents the ratio of energy loss over energy input and can be described as the ability of foam to reduce impact forces and rebound resiliance.

It was surprisingly found that despite even the lower density up to 14%, the same formulation, same machine trial and same conditions test plaques prepared by superimposition of 5 test plates to overall thickness of 20 mm, i.e. the composite elements, provide beneficially lower energy loss and damping compared to the block elements. It is well known that continuous reduction of foam density parallel leads to unfavorable increase of energy loss. Surprisingly, the composite elements according to the present invention result in final elements with higher energy return.

### Short description of the Figure

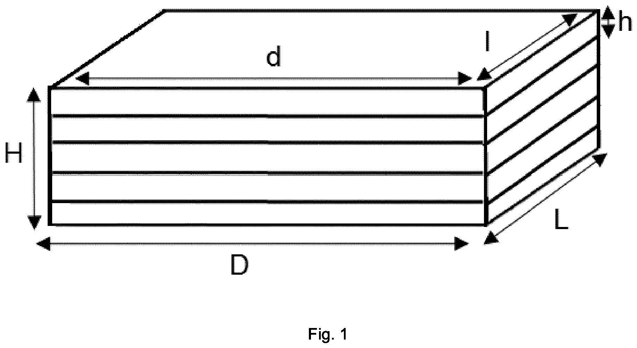

- **Fig. 1**: shows an exemplary composite element comprising five separate elements, wherein each element has a plate like form with a height (h), a longitudinal extension (d) and a lateral extension (I) and wherein the composite element has a longitudinal extension (D), a lateral extension (L) and a height (H), wherein (H) is equal to the sum of the heights (h) of all five elements and wherein (d) is equal to (D) and (I) is equal to (L).

### Cited Literature

"Kunststoffhandbuch, Band 7, Polyurethane" [Plastics handbook, volume 7, Polyurethanes], Carl Hanser Verlag, 3rd edition, 1993, chapters 3.1, 3.2, 3.3.2, 3.4.1, 3.4.4, 3.4.5, 3.4.6 to 3.4.11, 5, 5.4, 6, 7
WO 2006/034800 A1
EP 0090444 A1
WO 2005/090440 A1
WO 2006/042674 A1
EP 0364854 A1
US 5,506,275
EP 0897402 A1
Brueckner at al., Procedia Engineering 2 (2010) 2789-2793

## Claims

1. Use of a composite element for a shoe sole, wherein the composite element comprises at least two elements, wherein each element has a body, a longitudinal extension and a height h vertical to the longitudinal extension and comprises a polymeric material with cellular structure, wherein the elements are at least in partial contact parallel to the longitudinal extension and have a closed surface (skin) at least in the contact area; and wherein the polymeric material with cellular structure of each element is independently selected from polyurethane foams.

2. The use of a composite element according to claim 1, wherein each element consists of the polymeric material with cellular structure.

3. The use of a composite element according to claim 1 or 2, wherein the composite element has a height H vertical to each element's longitudinal extension, which is preferably in the range of from 1 to 10000 mm, more preferably in the range of from 5 to 1000 mm, more preferably in the range of from 5 to 50 mm.

4. The use of a composite element according to any one of claims 1 to 3, wherein each element's height h is in the range of from 0.25 to 2500 mm, more preferably in the range of from 0.5 to 250 mm, more preferably in the range of from 0.75 to 250 mm, more preferably in the range of from 1 to 10 mm.

5. The use of a composite element according to any one of claims 1 to 4, wherein the closed surface of the elements is an integral skin.

6. The use of a composite element according to any one of claims 1 to 5, wherein the closed surface of the elements is formed by an external layer, which is preferably adhesively bonded to the element's body, wherein the material of the external layer is the same polymeric material as the element's polymeric material.

7. The use of a composite element according to any one of claims 1 to 6, wherein the closed surface has a thickness (vertical to the element's longitudinal extension) in the range of from 10 to 2000 µm, preferably in the range of from 50 to 500 µm.

8. The use of a composite element according to any one of claims 1 to 7, wherein the elements are adhesively bonded in the contact area, preferably by a method selected from the group consisting of stitching, steam-chest molding and gluing.

9. The use of a composite element according to any one of claims 1 to 8, which comprises at least 3 elements, preferably from 3 to 10 elements.

10. The use of a composite element according to any one of claims 1 to 9, wherein the polyurethane foam is obtained or obtainable by reacting at least components (a) to (c):
(a) polyisocyanate composition;
(b) polyol composition;
(c) blowing agent.

11. The use of a composite element according to claim 10, wherein the polyurethane foam is obtained or obtainable by reacting at least components (a) to (c):
(a) polyisocyanate composition comprising at least 4,4'-MDI;
(b) polyol composition comprising at least one polyetherol;
(c) blowing agent composition comprising at least water.

12. The use of a composite element according to claim 10 or 11 wherein the polyurethane foam is obtained or obtainable by reacting at least components (a) to (c) and further (d1) to (d3):
(a) a polyisocyanate composition comprising at least 4,4'-MDI;
(b) a polyol composition comprising at least one polyetherol;
(c) blowing agent composition comprising at least water;
(d1) a chain extender comprising at least monoethylene glycol or propylene glycol;
(d2) optionally, a crosslinker comprising at least diethanolamine;
(d3) a catalyst comprising at least triethylene diamine, bis-(2-dimethylaminoethyl)ether or bismuth neodecanoate.

13. The use of a composite element according to any one of claims 1 to 12, wherein the shape of each element having body, a longitudinal extension and a height h vertical to the longitudinal extension is independently selected from the group of cuboid, especially rectangular cuboid or cube; prism; cylinder; and sphere, wherein preferably all elements of one composite element have the same shape.

14. A method for producing a composite element for a shoe sole, which comprises at least two elements, wherein each element has a body having a longitudinal extension and comprises a polymeric material with cellular structure, wherein the elements are at least in partial contact parallel to the longitudinal extension and have a closed surface (skin) at least in the contact area and wherein the polymeric material with cellular structure of each element is independently selected from polyurethane foams, comprising:
(i) optionally preparing elements by foaming, preferably in a mold, wherein each element has a body having a longitudinal extension and comprises a polymeric material with cellular structure and has at least partially a closed surface, and wherein the polymeric material with cellular structure of each element is independently selected from polyurethane foams;
(ii) superimposing at least two elements, wherein superimposition is done so that the elements are at least partially in contact over their closed surfaces (contact area);
(iii) adhesive bonding the elements;
wherein step (i) comprises
(ii.1) introducing into a mold at least the components
(a) polyisocyanate composition;
(b)polyol composition;
(c) blowing agent composition;
(ii.2) reacting components (a) and (b) by foaming,
resulting in an element which has a body having a longitudinal extension and comprises a polymeric material with cellular structure and has at least partially a closed surface.

15. A composite element for a shoe sole or a part of a shoe sole, obtained or obtainable by the method of claim 14.

## Patentansprüche

1. Verwendung eines Verbundelements für eine Schuhsole, wobei das Verbundelement wenigstens zwei Elemente umfasst, wobei jedes Element einen Körper, eine Längsausdehnung und eine Höhe h senkrecht zu der Längsausdehnung aufweist und ein Polymermaterial mit zelliger Struktur umfasst, wobei die Elemente wenigstens in teilweisem Kontakt parallel zu der Längsausdehnung stehen und eine geschlossene Oberfläche (Haut) wenigstens in dem Kontaktbereich aufweisen; und wobei das Polymermaterial mit zelliger Struktur jedes Elements unabhängig ausgewählt ist aus Polyurethanschaumstoffen.

2. Verwendung eines Verbundelements gemäß Anspruch 1, wobei jedes Element aus dem Polymermaterial mit zelliger Struktur besteht.

3. Verwendung eines Verbundelements gemäß Anspruch 1 oder 2, wobei das Verbundelement eine Höhe H senkrecht zu der Längsausdehnung jedes Elements aufweist, die vorzugsweise in dem Bereich von 1 bis 10000 mm liegt, bevorzugter in dem Bereich von 5 bis 1000 mm, bevorzugter in dem Bereich von 5 bis 50 mm.

4. Verwendung eines Verbundelements gemäß einem der Ansprüche 1 bis 3, wobei die Höhe h jedes Elements in dem Bereich von 0,25 bis 2500 mm liegt, bevorzugter in dem Bereich von 0,5 bis 250 mm, bevorzugter in dem Bereich von 0,75 bis 250 mm, bevorzugter in dem Bereich von 1 bis 10 mm.

5. Verwendung eines Verbundelements gemäß einem der Ansprüche 1 bis 4, wobei die geschlossene Oberfläche der Elemente eine integrale Haut ist.

6. Verwendung eines Verbundelements gemäß einem der Ansprüche 1 bis 5, wobei die geschlossene Oberfläche der Elemente von einer Außenschicht gebildet wird, die vorzugsweise haftend an den Körper des Elements gebunden ist, wobei das Material der Außenschicht das gleiche Polymermaterial wie das Polymermaterial des Elements ist.

7. Verwendung eines Verbundelements gemäß einem der Ansprüche 1 bis 6, wobei die geschlossene Oberfläche eine Dicke (senkrecht zu der Längsausdehnung des Elements) in dem Bereich von 10 bis 2000 µm, vorzugsweise in dem Bereich von 50 bis 500 µm, aufweist.

8. Verwendung eines Verbundelements gemäß einem der Ansprüche 1 bis 7, wobei die Elemente in dem Kontaktbereich haftend gebunden sind, vorzugsweise durch ein Verfahren ausgewählt aus der Gruppe bestehend aus Nähen, Dampfkastenformen und Kleben.

9. Verwendung eines Verbundelements gemäß einem der Ansprüche 1 bis 8, das wenigstens 3 Elemente, vorzugsweise von 3 bis 10 Elemente, umfasst.

10. Verwendung eines Verbundelements gemäß einem der Ansprüche 1 bis 9, wobei der Polyurethanschaumstoff durch Umsetzen wenigstens der Komponenten (a) bis (c) erhalten oder erhältlich ist:
(a) Polyisocyanatzusammensetzung;
(b) Polyolzusammensetzung;
(c) Blähmittel.

11. Verwendung eines Verbundelements gemäß Anspruch 10, wobei der Polyurethanschaumstoff durch Umsetzen wenigstens der Komponenten (a) bis (c) erhalten oder erhältlich ist:
(a) Polyisocyanatzusammensetzung, umfassend wenigstens 4,4'-MDI;
(b) Polyolzusammensetzung, umfassend wenigstens ein Polyetherol;
(c) Blähmittelzusammensetzung, umfassend wenigstens Wasser.

12. Verwendung eines Verbundelements gemäß Anspruch 10 oder 11, wobei der Polyurethanschaumstoff durch Umsetzen wenigstens der Komponenten (a) bis (c) und ferner (d1) bis (d3) erhalten oder erhältlich ist:
(a) eine Polyisocyanatzusammensetzung, umfassend wenigstens 4,4'-MDI;
(b) eine Polyolzusammensetzung, umfassend wenigstens ein Polyetherol;
(c) Blähmittelzusammensetzung, umfassend wenigstens Wasser;
(d1) ein Kettenverlängerungsmittel, umfassend wenigstens Monoethylenglycol oder Propylenglycol;
(d2) gegebenenfalls ein Vernetzer, umfassend wenigstens Diethanolamin;
(d3) ein Katalysator, umfassend wenigstens Triethylendiamin, Bis(2-dimethylaminoethyl)ether oder Bismutneodecanoat.

13. Verwendung eines Verbundelements gemäß einem der Ansprüche 1 bis 12, wobei die Form jedes Elements, das einen Körper, eine Längsausdehnung und eine Höhe h senkrecht zu der Längsausdehnung aufweist, unabhängig ausgewählt ist aus der Gruppe von Kuboid, insbesondere rechteckiges Kuboid oder Kubus; Prisma; Zylinder; und Kugel, wobei vorzugsweise alle Elemente eines Verbundelements die gleiche Form aufweisen.

14. Verfahren zur Herstellung eines Verbundelements für eine Schuhsole, das wenigstens zwei Elemente umfasst, wobei jedes Element einen Körper mit einer Längsausdehnung aufweist und ein Polymermaterial mit zelliger Struktur umfasst, wobei die Elemente wenigstens in teilweisem Kontakt parallel zu der Längsausdehnung stehen und eine geschlossene Oberfläche (Haut) wenigstens in dem Kontaktbereich aufweisen und wobei das Polymermaterial mit zelliger Struktur jedes Elements unabhängig ausgewählt ist aus Polyurethanschaumstoffen, umfassend:
(i) gegebenenfalls Herstellen von Elementen durch Schäumen, vorzugsweise in einem Formwerkzeug, wobei jedes Element einen Körper mit einer Längsausdehnung aufweist und ein Polymermaterial mit zelliger Struktur umfasst und wenigstens zum Teil eine geschlossene Oberfläche aufweist, und wobei das Polymermaterial mit zelliger Struktur jedes Elements unabhängig ausgewählt ist aus Polyurethanschaumstoffen;
(ii) Übereinanderlegen von wenigstens zwei Elementen, wobei das Übereinanderlegen so durchgeführt wird, dass die Elemente wenigstens teilweise über ihre geschlossenen Oberflächen in Kontakt stehen (Kontaktbereich);
(iii) haftendes Binden der Elemente;
wobei Schritt (i) umfasst:
(i.1) Einführen wenigstens der Komponenten
(a) Polyisocyanatzusammensetzung;
(b) Polyolzusammensetzung;
(c) Blähmittelzusammensetzung;
in ein Formwerkzeug;
(i.2) Umsetzen der Komponenten (a) und (b) durch Schäumen, um ein Element zu ergeben, das einen Körper mit einer Längsausdehnung aufweist und ein Polymermaterial mit zelliger Struktur umfasst und wenigstens zum Teil eine geschlossene Oberfläche aufweist.

15. Verbundelement für eine Schuhsole oder einen Teil einer Schuhsole, erhalten oder erhältlich durch das Verfahren gemäß Anspruch 14.

## Revendications

1. Utilisation d'un élément composite pour une semelle de chaussure, l'élément composite comprenant au moins deux éléments, chaque élément possédant un corps, une extension longitudinale et une hauteur h verticale par rapport à l'extension longitudinale et comprenant un matériau polymérique doté d'une structure cellulaire, les éléments étant au moins en contact partiel parallèle à l'extension longitudinale et possédant une surface fermée (peau) au moins dans la zone de contact ; et le matériau polymérique doté d'une structure cellulaire de chaque élément étant indépendamment choisi parmi des mousses de polyuréthane.

2. Utilisation d'un élément composite selon la revendication 1, chaque élément étant constitué du matériau polymérique doté d'une structure cellulaire.

3. Utilisation d'un élément composite selon la revendication 1 ou 2, l'élément composite possédant une hauteur H verticale par rapport à l'extension longitudinale de chaque élément, qui est préférablement dans la plage allant de 1 à 10 000 mm, plus préférablement dans la plage allant de 5 à 1 000 mm, plus préférablement dans la plage allant de 5 à 50 mm.

4. Utilisation d'un élément composite selon l'une quelconque des revendications 1 à 3, la hauteur h de chaque élément étant dans la plage allant de 0,25 à 2 500 mm, plus préférablement dans la plage allant de 0,5 à 250 mm, plus préférablement dans la plage allant de 0,75 à 250 mm, plus préférablement dans la plage allant de 1 à 10 mm.

5. Utilisation d'un élément composite selon l'une quelconque des revendications 1 à 4, la surface fermée des éléments étant une peau intégrale.

6. Utilisation d'un élément composite selon l'une quelconque des revendications 1 à 5, la surface fermée des éléments étant formée par une couche externe, qui est préférablement liée de manière adhésive au corps de l'élément, le matériau de la couche externe étant le même matériau polymérique que le matériau polymérique de l'élément.

7. Utilisation d'un élément composite selon l'une quelconque des revendications 1 à 6, la surface fermée possédant une épaisseur (verticale par rapport à l'extension longitudinale de l'élément) dans la plage allant de 10 à 2 000 µm, préférablement dans la plage allant de 50 à 500 µm.

8. Utilisation d'un élément composite selon l'une quelconque des revendications 1 à 7, les éléments étant liés de manière adhésive dans la zone de contact, préférablement par un procédé choisi dans le groupe constitué par un piquage, moulage par coffre à vapeur et collage.

9. Utilisation d'un élément composite selon l'une quelconque des revendications 1 à 8, qui comprend au moins 3 éléments, préférablement de 3 à 10 éléments.

10. Utilisation d'un élément composite selon l'une quelconque des revendications 1 à 9, la mousse de polyuréthane étant obtenue ou pouvant être obtenue par la mise en réaction au moins des composants (a) à (c) :
(a) une composition de polyisocyanate ;
(b) une composition de polyol ;
(c) un agent de gonflement.

11. Utilisation d'un élément composite selon la revendication 10, la mousse de polyuréthane étant obtenue ou pouvant être obtenue par la mise en réaction au moins des composants (a) à (c) :
(a) une composition de polyisocyanate comprenant au moins du 4,4'-MDI ;
(b) une composition de polyol comprenant au moins un polyétherol ;
(c) une composition d'agent de gonflement comprenant au moins de l'eau.

12. Utilisation d'un élément composite selon la revendication 10 ou 11, la mousse de polyuréthane étant obtenue ou pouvant être obtenue par la mise en réaction au moins des composants (a) à (c) et en outre (d1) à (d3) :
(a) une composition de polyisocyanate comprenant au moins du 4,4'-MDI ;
(b) une composition de polyol comprenant au moins un polyétherol ;
(c) une composition d'agent de gonflement comprenant au moins de l'eau ;
(d1) un extenseur de chaînes comprenant au moins du monoéthylèneglycol ou du propylèneglycol ;
(d2) éventuellement, un agent de réticulation comprenant au moins de la diéthanolamine ;
(d3) un catalyseur comprenant au moins de la triéthylènediamine, du bis-(2-diméthylaminoéthyl)éther ou du néodécanoate de bismuth.

13. Utilisation d'un élément composite selon l'une quelconque des revendications 1 à 12, la forme de chaque élément possédant un corps, une extension longitudinale et une hauteur h verticale par rapport à l'extension longitudinale, étant indépendamment choisie dans le groupe d'une forme cuboïde, notamment cuboïde rectangulaire ou cube ; de prisme ; de cylindre ; et de sphère, préférablement tous les éléments d'un élément composite possédant la même forme.

14. Procédé pour la production d'un élément composite pour une semelle de chaussure, qui comprend au moins deux éléments, chaque élément possédant un corps possédant une extension longitudinale et comprenant un matériau polymérique doté d'une structure cellulaire, les éléments étant au moins en contact partiel parallèle à l'extension longitudinale et possédant une surface fermée (peau) au moins dans la zone de contact et le matériau polymérique doté d'une structure cellulaire de chaque élément étant indépendamment choisi parmi des mousses de polyuréthane, comprenant :
(i) éventuellement, la préparation d'éléments par moussage, préférablement dans un moule, chaque élément possédant un corps possédant une extension longitudinale et comprenant un matériau polymérique doté d'une structure cellulaire et possédant au moins partiellement une surface fermée, et le matériau polymérique doté d'une structure cellulaire de chaque élément étant indépendamment choisi parmi des mousses de polyuréthane ;
(ii) la superposition d'au moins deux éléments, la superposition étant réalisée de sorte que les éléments sont au moins partiellement en contact sur leurs surfaces fermées (zone de contact) ;
(iii) la liaison adhésive des éléments ;
l'étape (i) comprenant
(i.1) l'introduction dans un moule au moins des composants
(a)une composition de polyisocyanate ;
(b)une composition de polyol ;
(c)une composition d'agent de gonflement ;
(i.2) la mise en réaction des composants (a) et (b) par moussage, résultant en un élément qui possède un corps possédant une extension longitudinale et qui comprend un matériau polymérique doté d'une structure cellulaire et qui possède au moins partiellement une surface fermée.

15. Élément composite pour une semelle de chaussure ou une partie d'une semelle de chaussure, obtenu ou pouvant être obtenu par le procédé selon la revendication 14.
